# EUROPÄISCHE PATENTSCHRIFT

(11) **EP 1 105 666 B1**
(45) Veröffentlichungstag und Bekanntmachung des Hinweises auf die Patenterteilung: **16.04.2003**
(21) Anmeldenummer: 99944464.9
(22) Anmeldetag: 21.08.1999
(51) Int. Cl.: F16K 11/074, B62D 5/083, B62D 5/09

(54) **MEHRWEGE-DREHVENTIL**
MULTIWAY TURNING VALVE
VALVE ROTATIVE MULTIVOIE

(30) Priorität: 29.08.1998 DE 19839427
(43) Veröffentlichungstag der Anmeldung: 13.06.2001
(73) Patentinhaber: ZF Lenksysteme GmbH, 73522 Schwäbisch Gmünd (DE)
(72) Erfinder: ELSER, Dieter, D-73457 Essingen (DE); HOFMANN, Falk, D-74523 Schwäbisch Hall (DE)
(86) Internationale Anmeldenummer: EP9906137
(87) Internationale Veröffentlichungsnummer: WO00012921

(56) Entgegenhaltungen:
- EP-A- 0 102 443
- EP-B- 0 145 546
- DE-A- 19 541 752

## Beschreibung

Die Erfindung betrifft ein Mehrwege-Drehventil nach dem Oberbegriff des Anspruches 1.

Das Mehrwege-Drehventil enthält zwei Ventilelemente, die zur Steuerung eines Druckmittels zu und von zwei Arbeitsräumen wenigstens eines Servomotors und zu einem Rücklaufanschluß für einen Druckmittelbehälter zusammenwirken. Die beiden Ventilelemente sind relativ zueinander verdrehbar. Das eine der beiden Ventilelemente weist einen Hohlraum auf, in dem zwei einander zugewandte ebene Steuerflächen angeordnet sind. Das andere der beiden Ventilelemente ist eine im wesentlichen ebene Scheibe, die zwei voneinander abgekehrte ebene Steuerflächen aufweist. Die ebenen Steuerflächen der beiden Ventilelemente weisen miteinander zusammenwirkende Steueröffnungen auf.

Ein solches Mehrwege-Drehventil ist beispielsweise aus der EP-B1-0 145 546 bekannt. Dieses Mehrwege-Drehventil ist für eine Kraftfahrzeug-Servolenkung vorgesehen. Dabei ist ein Primärteil mit einem Eingangsbetätigungsteil verbunden. Ein Sekundärteil ist über eine Totgangverbindung dem Primärteil zugeordnet. Durch die Totgangverbindung ist eine begrenzte Relativverschiebung zwischen dem Primär- und dem Sekundärteil möglich. Dadurch, daß das Primärteil mit einem drehbaren Eingangsbetätigungsteil verbunden ist, ist die Anwendung eines solchen Mehrwege-Drehventils auf Anwendungsfälle beschränkt, bei denen ein drehbares Eingangsbetätigungsteil vorhanden ist, beispielsweise bei Kraftfahrzeug-Hilfskraftlenkungen.

Der Erfindung liegt die Aufgabe zugrunde, ein Mehrwege-Drehventil zu schaffen, das nicht auf die Verwendung in Kraftfahrzeug-Hilfskraftlenkungen beschränkt ist. Das Mehrwege-Drehventil soll allgemein als Steuerorgan in hydraulischen Systemen anwendbar sein.

Diese Aufgabe wird durch das im Anspruch 1 gekennzeichnete Mehrwege-Drehventil gelöst. Die Lösung besteht darin, daß bei einem gattungsgemäßen Mehrwege-Drehventil eines der beiden Ventilelemente durch wenigstens ein Betätigungselement um einen begrenzten Weg verdrehbar ist, wobei das Betätigungselement im wesentlichen in tangentialer Richtung an dem Ventilelement angreift. Durch diese Ausbildung kann das Mehrwege-Drehventil völlig frei an unterschiedlichen Stellen, beispielsweise in einem Kraftfahrzeug, eingesetzt werden.

Vorteilhafte und zweckmäßige Ausgestaltungen der Erfindung sind in den Unteransprüchen angegeben. Weist das verdrehbare Ventilelement die Form eines Kreissegmentes, insbesondere eine Halbkreisform, auf, dessen Begrenzungsflächen radial ausgerichtet sind, so kann ein Betätigungselement an einer der radialen Begrenzungsflächen angreifen. Ein solches Betätigungselement kann als Stößel ausgebildet sein, der durch einen Elektromagneten verstellbar ist. Werden zwei solcher Betätigungselemente verwendet, dann läßt sich das verdrehbare Ventilelement in beiden Drehrichtungen verstellen und zentrieren. Die Elektromagneten können - bei einer Anwendung des Mehrwege-Drehventils in einem Kraftfahrzeug - in Abhängigkeit von wenigstens einem Parameter erregt werden. Dadurch ist es möglich, unterschiedliche Einflüsse, wie Lenkwinkel, Fahrzeuggeschwindigkeit, Beladung des Fahrzeuges usw., bei der Verstellung des Mehrwege-Drehventils zu berücksichtigen.

Besonders einfach läßt sich ein solches Mehrwege-Drehventil herstellen, wenn das eine der beiden Ventilelemente aus zwei preßgeformten, plattenförmigen Leichtmetall-Gehäuseteilen besteht. In diesen Leichtmetall-Gehäuseteilen können die notwendigen Steueröffnungen direkt bei der Herstellung mit eingepreßt werden. Das andere der beiden Ventilelemente, das drehbare, kann als gestanztes Blechteil oder als Sinterteil ausgebildet werden. In diesem Fall können bei dessen Herstellung die erforderlichen Steueröffnungen automatisch eingeformt werden, beispielsweise durch Stanzen, Prägen oder Sintern. Zweckmäßigerweise werden die beiden Leichtmetall-Gehäuseteile und das drehbare Teil durch eine zentral angeordnete Schraube drehbar miteinander verbunden. Dadurch wird zum einen eine einfache Montage ermöglicht, zum anderen kann damit das Planspiel des Mehrwege-Drehventils zwischen den Steuerflächen der beiden Ventilelemente auf einfache Weise korrigiert werden. Damit kann auch eine innere Leckage des Mehrwege-Drehventils in weitem Umfang eingestellt werden.

Zur Erweiterung des Mehrwege-Drehventils kann an diesem wenigstens eine zusätzliche Platte mit einem weiteren Dreh- oder Schieberventil angeordnet werden. Dadurch können zusätzliche Funktionen, wie beispielsweise eine Hydraulik-Kurzschlußschaltung, in das Mehrwege-Drehventil integriert werden. Auch hierbei ist es zweckmäßig, für die Betätigungselemente des zusätzlichen Dreh- oder Schieberventils einen Elektromagneten vorzusehen.

Im folgenden wird die Erfindung anhand zweier in der Zeichnung dargestellter Ausführungsbeispiele näher erläutert.
Es zeigen:

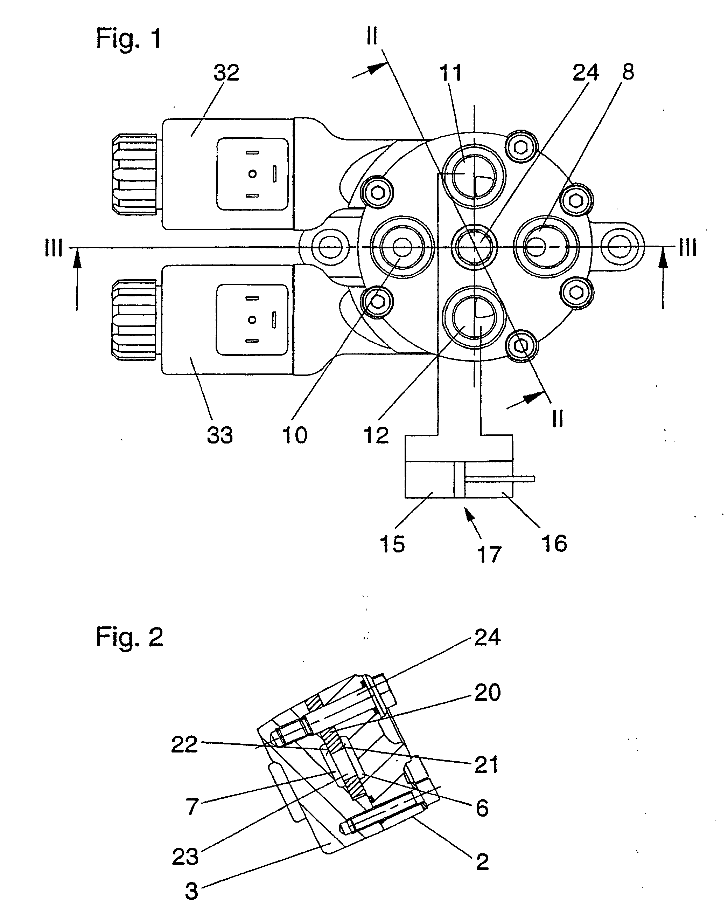

- Fig. 1: eine Draufsicht auf das erfindungsgemäße Mehrwege-Drehventil;
- Fig. 2: einen Teil-Schnitt nach der Linie II-II in Fig. 1;

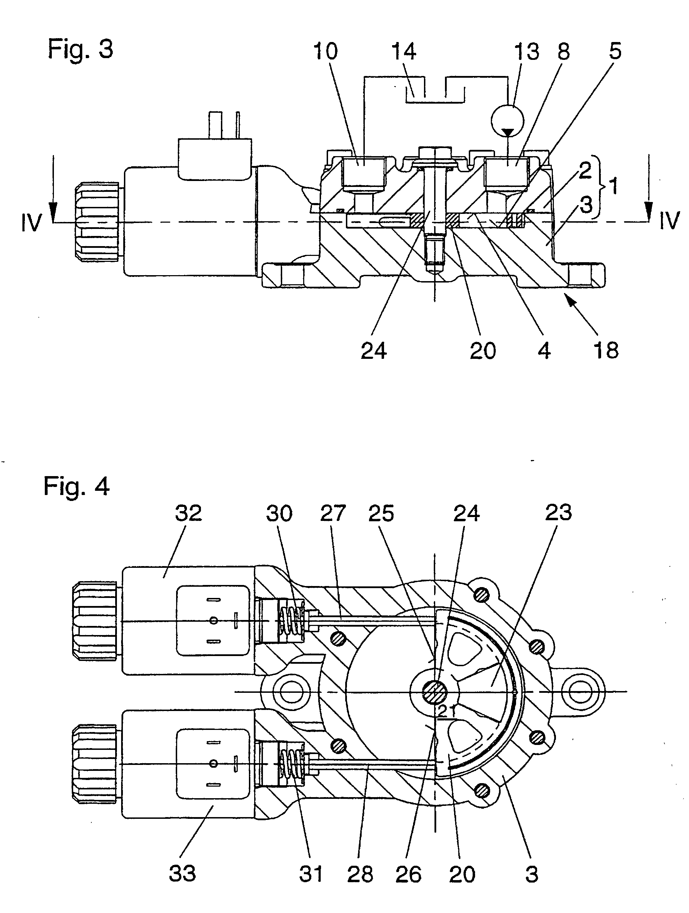

- Fig. 3: einen Schnitt nach der Linie III-III in Fig. 1;
- Fig. 4: einen Schnitt nach der Linie IV-IV in Fig. 3 und

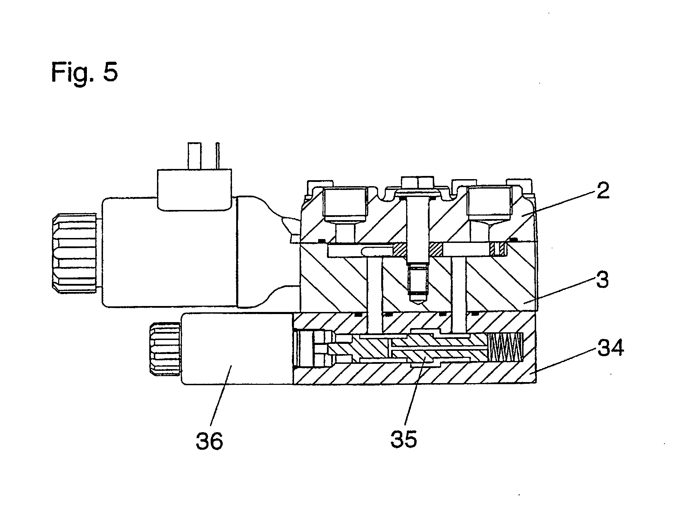

- Fig. 5: einen Schnitt durch ein zweites Ausführungsbeispiel des Mehrwege-Drehventils nach der Linie II-II in Fig. 1.

Das Mehrwege-Drehventil weist ein Ventilgehäuse 1 auf, das aus zwei im wesentlichen plattenförmigen Gehäuseteilen 2 und 3 besteht. Die beiden Gehäuseteile 2 und 3 sind zweckmäßigerweise durch ein Preßform-Verfahren aus Leichtmetall, insbesondere Aluminium, hergestellt. Jedes der beiden Gehäuseteile 2 und 3 weist eine ebene Steuerfläche 4 bzw. 5 auf, in die Steueröffnungen 6 bzw. 7 beim Herstellen eingepreßt sind. Die verschiedenen Steueröffnungen 6 des einen Gehäuseteiles 2 stehen in Verbindung mit einem Zulaufanschluß 8, einem Rücklaufanschluß 10 und zwei Zylinderanschlüssen 11 und 12. Der Zulaufanschluß 8 ist mit einer Druckmittelquelle, beispielsweise einer Servopumpe 13 oder einem nicht dargestellten Druckmittelspeicher, verbunden. Der Rücklaufanschluß 10 ist mit einem Druckmittelbehälter 14 verbunden. Die Zylinderanschlüsse 11 und 12 stehen in Verbindung mit zwei Arbeitsräumen 15 und 16 eines Servomotors 17. Das Ventilgehäuse 1 bildet ein erstes Ventilelement 18, das in einem Hohlraum, der zwischen den beiden Steuerflächen 4 und 5 gebildet ist, ein zweites Ventilelement 20 aufnimmt.

Das zweite Ventilelement 20 besteht aus einer im wesentlichen ebenen Scheibe, die zweckmäßigerweise als gestanztes Blechteil oder als Sinterteil ausgeführt ist. Das Ventilelement 20 weist zwei voneinander abgekehrte, im wesentlichen ebene Steuerflächen 21 und 22 auf. In dem Ventilelement 20 sind bereits beim Herstellen Steueröffnungen 23 mitangeformt, beispielsweise durch Stanzen, Prägen oder Sintern.

Die beiden Gehäuseteile 2 und 3 des ersten Ventilelementes 18 sind mit dem zweiten Ventilelement 20 durch eine zentrale Schraube 24 verbunden. Die Schraube 24 wirkt gleichzeitig als Drehachse für das zweite Ventilelement 20. Mit der Schraube 24 kann das Planspiel des Mehrwege-Drehventils, d. h. das Spiel zwischen den Steuerflächen 4 und 5 des ersten Ventilelementes 18 und den Steuerflächen 21 und 22 des zweiten Ventilelementes 20, sehr genau und feinfühlig eingestellt werden.

Die Steueröffnungen 6 und 7 des ersten Ventilelementes 18 wirken mit den Steueröffnungen 23 des zweiten Ventilelements 20 zusammen zur Steuerung eines Druckmittels von der Servopumpe 13 zu und von den beiden Arbeitsräumen 15 und 16 des Servomotors 17 und zu dem Rücklaufanschluß 10.

Das zweite Ventilelement 20 weist eine im wesentlichen halbkreisförmige Form auf mit zwei im wesentlichen radialen Begrenzungsflächen 25 und 26. An den Begrenzungsflächen 25 und 26 greifen zwei Betätigungselemente in der Form von Stößeln 27 und 28 an. Die Stößel 27 und 28 werden durch zwei Federn 30 und 31 in Neutralstellung gehalten und zentrieren dadurch das zweite Ventilelement 20 in seiner Neutralstellung. Die beiden Stößel 27 und 28 werden durch Elektromagneten 32 und 33 verstellt. Dadurch kann das Ventilelement 20 um einen begrenzten Winkel verdreht werden. Wird das Mehrwege-Drehventil in einem Kraftfahrzeug verwendet, so kann die Verstellung des Betätigungselementes durch die Elektromagneten 32 bzw. 33 in Abhängigkeit von wenigstens einem fahrzeugspezifischen Parameter, beispielsweise dem Lenkwinkel, der Fahrzeuggeschwindigkeit oder dem Beladungszustand des Fahrzeugs, erfolgen.

Um in das bisher beschriebene Mehrwege-Drehventil weitere Funktionen zu integrieren, wie beispielsweise eine Hydraulik-Kurzschlußschaltung, können an dem Ventilgehäuse 1 zusätzliche Platten 34 angebracht werden. In einer solchen Platte 34 kann ein weiteres Drehventil oder auch ein Schieberventil 35 angeordnet sein, das durch einen weiteren Elektromagneten 36 verstellt werden kann.

### Bezugszeichen

- 1: Ventilgehäuse
- 2: Gehäuseteil
- 3: Gehäuseteil
- 4: Steuerfläche
- 5: Steuerfläche
- 6: Steueröffnung
- 7: Steueröffnung
- 8: Zulaufanschluß
- 9: -
- 10: Rücklaufanschluß
- 11: Zylinderanschluß
- 12: Zylinderanschluß
- 13: Servopumpe
- 14: Druckmittelbehälter
- 15: Arbeitsraum
- 16: Arbeitsraum
- 17: Servomotor
- 18: Ventilelement
- 19: -
- 20: Ventilelement
- 21: Steuerfläche
- 22: Steuerfläche
- 23: Steueröffnung
- 24: Schraube
- 25: Begrenzungsfläche
- 26: Begrenzungsfläche
- 27: Stößel
- 28: Stößel
- 29: -
- 30: Feder
- 31: Feder
- 32: Elektromagnet
- 33: Elektromagnet
- 34: Platte
- 35: Schieberventil
- 36: Elektromagnet

## Patentansprüche

1. Mehrwege-Drehventil mit zwei zur Steuerung eines Druckmittels zu und von zwei Arbeitsräumen (15, 16) wenigstens eines Servomotors (17) und zu einem Rücklaufanschluß (10) für einen Druckmittelbehälter (14) zusammenwirkenden Ventilelementen (18, 20) und mit folgenden weiteren Merkmalen:
- die beiden Ventilelemente (18, 20) sind relativ zueinander verdrehbar,
- das eine (18) der beiden Ventilelemente (18, 20) weist einen Hohlraum auf, in dem zwei einander zugewandte ebene Steuerflächen (4, 5) angeordnet sind,
- das andere (20) der beiden Ventilelemente (18, 20) ist eine im wesentlichen ebene Scheibe, die zwei von einander abgekehrte ebene Steuerflächen (21, 22) aufweist,
- die ebenen Steuerflächen (4, 5; 21, 22) der beiden Ventilelemente (18, 20) weisen miteinander zusammenwirkende Steueröffnungen (6, 7; 23) auf,
**dadurch gekennzeichnet, daß** das andere (20) der beiden Ventilelemente (18, 20) durch wenigstens ein Betätigungselement (27, 28) um einen begrenzten Winkel verdrehbar ist, wobei das Betätigungselement in im wesentlichen tangentialer Richtung an dem Ventilelement (20) angreift.

2. Mehrwege-Drehventil nach Anspruch 1, **dadurch gekennzeichnet, daß** das andere (20) der beiden Ventilelemente (18, 20) im wesentlichen die Form eines Kreissegmentes mit im wesentlichen radialen Begrenzungsflächen (25, 26) aufweist und daß das wenigstens eine Betätigungselement an einer der im wesentlichen radialen Begrenzungsflächen (25, 26) angreift.

3. Mehrwege-Drehventil nach einem der Ansprüche 1 oder 2, **dadurch gekennzeichnet, daß** das andere (20) der beiden Ventilelemente (18, 20) im wesentlichen eine Halbkreisform aufweist.

4. Mehrwege-Drehventil nach einem der Ansprüche 1 bis 3, **dadurch gekennzeichnet, daß** das wenigstens eine Betätigungselement durch einen Stößel (27, 28) gebildet ist, der durch einen Elektromagneten (32, 33) verstellbar ist.

5. Mehrwege-Drehventil nach einem der Ansprüche 3 und 4, **dadurch gekennzeichnet, daß** zwei durch je einen Elektromagneten (32, 33) verstellbare Betätigungselemente an den radialen Begrenzungsflächen (25, 26) angreifen.

6. Mehrwege-Drehventil nach einem der Ansprüche 1 bis 5, **dadurch gekennzeichnet, daß** das eine (18) der beiden Ventilelemente (18, 20) aus zwei preßgeformten, plattenförmigen Leichtmetall-Gehäuseteilen (2, 3) mit eingepreßten Steueröffnungen (6, 7) besteht.

7. Mehrwege-Drehventil nach einem der Ansprüche 1 bis 6, **dadurch gekennzeichnet, daß** das andere (20) der beiden Ventilelemente (18, 20) ein gestanztes Blechteil ist.

8. Mehrwege-Drehventil nach einem der Ansprüche 1 bis 6, **dadurch gekennzeichnet, daß** das andere (20) der beiden Ventilelemente (18, 20) ein Sinterteil ist.

9. Mehrwege-Drehventil nach einem der Ansprüche 6 bis 8, **dadurch gekennzeichnet, daß** das Planspiel der beiden Ventilelemente (18, 20) durch eine zentral angeordnete Schraube (24) einstellbar ist und daß die Schraube (24) gleichzeitig als Drehachse für das andere (20) der beiden Ventilelemente (18, 20) dient.

10. Mehrwege-Drehventil nach einem der Ansprüche 1 bis 9, **dadurch gekennzeichnet, daß** an dem Mehrwege-Drehventil wenigstens eine zusätzliche Platte (34) mit einem Dreh- oder Schieberventil (35) angeordnet ist, durch das das Mehrwege-Drehventil um eine zusätzliche Funktion erweitert werden kann.

11. Mehrwege-Drehventil nach Anspruch 10, **dadurch gekennzeichnet, daß** das Dreh- oder Schieberventil (35) der zusätzlichen Platte (34) durch ein Betätigungselement mit einem Elektromagneten (36) betätigbar ist.

12. Mehrwege-Drehventil nach einem der Ansprüche 1 bis 11, **dadurch gekennzeichnet, daß** bei Verwendung des Mehrwege-Drehventils in einem Kraftfahrzeug die Verstellung des Betätigungselementes durch den Elektromagneten (32, 33) in Abhängigkeit von wenigstens einem fahrzeugspezifischen Parameter erfolgt.

## Claims

1. Multiway rotary valve comprising two valve elements (18, 20) which interact to direct a pressurized medium to and from two working chambers (15, 16) of at least one servomotor (17) and to a return connection (10) for a pressurized-medium vessel (14), having the following further features:
- the two valve elements (18, 20) are rotatable relative to each other,
- one (18) of the two valve elements (18, 20) has a cavity, in which two planar control surfaces (4, 5) facing each other are arranged,
- the other (20) of the two valve elements (18, 20) is an essentially planar disc, which has two planar control surfaces (21, 22) facing away from each other,
- the planar control surfaces (4, 5; 21, 22) of the two valve elements (18, 20) have control openings (6, 7; 23) that interact with each other,
**characterized in that** the other (20) of the two valve elements (18, 20) is rotatable by a limited angle by at least one actuating element (27, 28), the actuating element acting on the valve element (20) in an essentially tangential direction.

2. Multiway rotary valve according to Claim 1, **characterized in that** the other (20) of the two valve elements (18, 20) essentially has the shape of a circular segment with essentially radial boundary surfaces (25, 26), and **in that** the at least one actuating element acts on one of the essentially radial boundary surfaces (25, 26).

3. Multiway rotary valve according to either of Claims 1 and 2, **characterized in that** the other (20) of the two valve elements (18, 20) essentially has a semicircular shape.

4. Multiway rotary valve according to one of Claims 1 to 3, **characterized in that** the at least one actuating element is formed by a tappet (27, 28) that can be adjusted by an electromagnet (32, 33).

5. Multiway rotary valve according to either of Claims 3 and 4, **characterized in that** two actuating elements act on the radial boundary surfaces (25, 26), each actuating element being adjustable by a respective electromagnet (32, 33).

6. Multiway rotary valve according to one of Claims 1 to 5, **characterized in that** one (18) of the two valve elements (18, 20) comprises two press-formed, plate-shaped, light-metal housing parts (2, 3) having pressed-in control openings (6, 7).

7. Multiway rotary valve according to one of Claims 1 to 6, **characterized in that** the other (20) of the two valve elements (18, 20) is a punched sheet-metal part.

8. Multiway rotary valve according to one of Claims 1 to 6, **characterized in that** the other (20) of the two valve elements (18, 20) is a sintered part.

9. Multiway rotary valve according to one of Claims 6 to 8, **characterized in that** the planar clearance between the two valve elements (18, 20) is adjustable by a centrally arranged bolt (24), and **in that** the bolt (24) simultaneously serves as a rotational axis for the other (20) of the two valve elements (18, 20).

10. Multiway rotary valve according to one of Claims 1 to 9, **characterized in that** at least one additional plate (34) with a rotary valve 'or a slide valve (35), by means of which an additional function can be added to the multiway rotary valve, is arranged on the multiway rotary valve.

11. Multiway rotary valve according to Claim 10, **characterized in that** the rotary valve or slide valve (35) of the additional plate (34) is actuable by an actuating element with an electromagnet (36).

12. Multiway rotary valve according to one of Claims 1 to 11, **characterized in that**, when the multiway rotary valve is used in a motor vehicle, the actuating element is adjusted by the electromagnet (32, 33) as a function of at least one vehicle-specific parameter.

## Revendications

1. Vanne rotative à plusieurs voies, avec deux éléments de vanne (18, 20) coopérant pour la commande d'un fluide sous pression vers et de deux chambres de travail (15, 16) d'au moins un servomoteur (17) et vers un raccord de retour (10) pour un réservoir de fluide sous pression (14) et avec les caractéristiques supplémentaires suivantes:
- les deux éléments de vanne (18, 20) peuvent tourner l'un par rapport à l'autre,
- un premier (18) des deux éléments de vanne (18, 20) présente un espace creux, dans lequel sont disposées deux faces de commande planes (4, 5) tournées l'une vers l'autre,
- l'autre (20) des deux éléments de vanne (18, 20) est un disque sensiblement plan, qui présente deux faces de commande planes (21, 22) situées à l'opposé l'une de l'autre,
- les faces de commande planes (4, 5; 21, 22) dés deux éléments de vanne (18, 20) présentent des ouvertures de commande (6, 7; 23) coopérant les unes avec les autres,
**caractérisée en ce que** l'autre (20) des deux éléments de vanne (18, 20) peut tourner d'un angle limité au moyen d'au moins un organe de commande (27, 28), l'organe de commande attaquant l'élément de vanne (20) en direction sensiblement tangentielle.

2. Vanne rotative à plusieurs voies suivant la revendication 1, **caractérisée en ce que** l'autre (20) des deux éléments de vanne (18, 20) présente sensiblement la forme d'un segment de cercle avec des faces de limitation (25, 26) sensiblement radiales, et **en ce que** le au moins un organe de commande attaque une des faces de limitation sensiblement radiales (25, 26).

3. Vanne rotative à plusieurs voies suivant l'une ou l'autre des revendications 1 ou 2, **caractérisée en ce que** l'autre (20) des deux éléments de vanne (18, 20) présente sensiblement la forme d'un demi-cercle.

4. Vanne rotative à plusieurs voies suivant l'une quelconque des revendications 1 à 3, **caractérisée en ce que** le au moins un organe de commande est formé par un poussoir (27, 28), qui peut être déplacé par un électroaimant (32, 33).

5. Vanne rotative à plusieurs voies suivant l'une quelconque des revendications 3 et 4, **caractérisée en ce que** deux organes de commande pouvant être déplacés chacun par un électroaimant (32, 33) attaquent les faces de limitation radiales (25, 26).

6. Vanne rotative à plusieurs voies suivant l'une quelconque des revendications 1 à 5, **caractérisée en ce que** le premier (18) des deux éléments de vanne (18, 20) se compose de deux parties de boîtier en métal léger (2, 3) en forme de plaque formées à la presse, avec des ouvertures de commande (6, 7) enfoncées.

7. Vanne rotative à plusieurs voies suivant l'une quelconque des revendications 1 à 6, **caractérisée en ce que** l'autre (20) des deux éléments de vanne (18, 20) est une pièce de tôle estampée.

8. Vanne rotative à plusieurs voies suivant l'une quelconque des revendications 1 à 6, **caractérisée en ce que** l'autre (20) des deux éléments de vanne (18, 20) est une pièce frittée.

9. Vanne rotative à plusieurs voies suivant l'une quelconque des revendications 6 à 8, **caractérisée en ce que** le jeu plan des deux éléments de vanne (18, 20) est réglable par une vis (24) disposée au centre, et **en ce que** la vis (24) sert en même temps d'axe de rotation pour l'autre (20) des deux éléments de vanne (18, 20).

10. Vanne rotative à plusieurs voies suivant l'une quelconque des revendications 1 à 9, **caractérisée en ce qu'**au moins une plaque supplémentaire (34) est disposée sur la vanne rotative à plusieurs voies, avec une vanne rotative ou coulissante (35), par laquelle la vanne rotative à plusieurs voies peut être étendue à une fonction supplémentaire.

11. Vanne rotative à plusieurs voies suivant la revendication 10, **caractérisée en ce que** la vanne rotative ou coulissante (35) de la plaque supplémentaire (34) peut être actionnée par un organe de commande avec un électroaimant (36).

12. Vanne rotative à plusieurs voies suivant l'une quelconque des revendications 1 à 11, **caractérisée en ce que**, lors de l'utilisation de la vanne rotative à plusieurs voies dans un véhicule automobile, le déplacement de l'organe de commande par l'électroaimant (32, 33) est effectué en fonction d'au moins un paramètre spécifique du véhicule.
